# EUROPÄISCHE PATENTSCHRIFT

(11) **EP 1 621 640 B1**
(45) Veröffentlichungstag und Bekanntmachung des Hinweises auf die Patenterteilung: **04.10.2006**
(21) Anmeldenummer: 04103352.3
(22) Anmeldetag: 13.07.2004
(51) Int. Cl.: C14C 9/02, C08F 220/00, C08F 230/02

(54) **Mittel zur hydrophobierenden Ausrüstung von Leder**
Agent for the hydrophobic treatment of leather
Agent d'imperméabilisation de cuir

(43) Veröffentlichungstag der Anmeldung: 01.02.2006
(73) Patentinhaber: Zschimmer & Schwarz GmbH & Co KG Chemische Fabriken, 56112 Lahnstein (DE)
(72) Erfinder: Francke, Heinrich, Dr., 56335 Neuhäusel (DE); Fischer, Rainer, 56338 Braubach (DE)
(74) Vertreter: Sternagel, Fleischer, Godemeyer & Partner

(56) Entgegenhaltungen:
- DE-A- 3 207 562
- DE-A- 3 926 167
- DE-A- 19 942 681
- GB-A- 2 105 745

## Beschreibung

Die vorliegende Erfindung betrifft Mono- und/oder Diphosphorsäureester enthaltende Copolymere, ein Verfahren zu deren Herstellung, ein Lederbehandlungsmittel, welches diese Copolymere enthält, sowie ein Verfahren zur Behandlung von Leder unter Verwendung des zuvor genannten Lederbehandlungsmittels.

Eine hydrophobierende Ausrüstung, bei der wasserabweisende Eigenschaften erzeugt werden und gleichzeitig Atmungsaktivität gewährleistet ist, ist bei den meisten Lederarten, seien es Schuhoberleder, Bekleidungsleder, aber auch bei Möbel- und Autopolsterledern in steigendem Maße gefragt. Eine derartige hydrophobierende Ausrüstung kann unter anderem auch interessant sein, um eine Fleckabweisung zu erzielen, wie beispielsweise bei Möbel- und Autopolsterledern. Aus dem Stand der Technik sind zahlreiche dazu angewandte Mittel und Verfahren bekannt, wobei die Grundlagen bei Hollstein, Bibliothek des Leders, Band 4, *Entfetten, Fetten und Hydrophobieren bei der Lederherstellung,* Umschauverlag Frankfurt/Main 1987 und bei Heidemann, *Fundamentals of Leather Manufacturing,* E. Roether, Verlag Darmstadt, 1993 beschrieben sind. Generell werden dabei die hydrophobierenden Substanzen in die Faserstruktur des Leders eingebracht, insbesondere in die Hohlräume, die ursprünglich bei der lebenden Haut von Gewebsflüssigkeiten erfüllt waren. Da die dazu eingesetzten hydrophoben Substanzen üblicherweise auch gleichzeitig auch schmierende Eigenschaften aufweisen, wird das Leder dabei nicht nur mit hydrophoben Eigenschaften versehen, sondern gleichzeitig auch geschmeidig und erhält einen angenehmen Griff.

Obwohl aus dem Stand der Technik zahlreiche hydrophobierende Substanzen und Hydrophobierungsverfahren bekannt sind, werden in diese Richtung weiterhin zahlreiche Untersuchungen durchgeführt, um die Hydrophobierung weiter zu optimieren. Generell kann man den größten bekannten Teil der Hydrophobierungsmittel in zwei Gruppen einteilen, die sich durch unterschiedliche Anwendungen ergeben: Hydrophobierungsmittel, welche aus organischer Phase angewandt werden, und solche, welche aus wässriger Phase Anwendung finden. Lösungsmittelhaltige Hydrophobierungssysteme enthalten beispielsweise Silikonöle oder Fluorkarbonharze und bewirken häufig eine verbesserte Wasserfestigkeit, haben jedoch den Nachteil, dass entweder Reste des Lösungsmittels im Leder verbleiben oder aufwendig entfernt werden müssen, und zudem Probleme beim Hydrophobierungsprozess hervorrufen können. Zudem erfolgt die Hydrophobierung üblicherweise nur oberflächlich, was die spätere Färbung und Zurichtung der Leder erschwert und die Griffeigenschaft der Leder beeinträchtigt.

Bei der Hydrophobierung in wässrigen Systemen werden beispielsweise langkettige Kohlenwasserstoffe, Öle, Fette, Wachse, Polymere oder auch Silikone, welche zum Teil organisch modifiziert sein können, verwendet. Um das Arbeiten in wässriger Flotte zu ermöglichen, müssen diese hydrophoben Substanzen jedoch zunächst mit Emulgatoren, die die Hydrophobierung nicht behindern dürfen, emulgiert werden. Dabei ist jedoch zu berücksichtigen, dass die Emulgatoren ebenfalls in die Faserstruktur des Leders eindringen können. Somit sollten entweder Emulgatoren verwendet werden, bei denen dies verhindert werden kann oder solche, die bei Einlagerung in das Leder nicht zu einer Verschlechterung der Eigenschaften führen. Um die eigentliche Hydrophobierung zu ermöglichen, ist es zudem erforderlich, die hydrophilen Eigenschaften der Emulgatoren leicht beseitigen zu können.

Als Emulgatoren kommen einerseits carboxylgruppenhaltige Verbindungen, wie Seifen, Sarkosinate oder Sulfosuccinate und andererseits Alkylphosphate in Frage, die dem System zusätzlich zugefügt werden. Diese Verbindungen bilden mit mehrwertigen Salzen, wie zum Beispiel Chrom (III)- oder Aluminiumsalzen, welche auch zum Gerben verwendet werden und daher keinen nachteiligen Einfluss auf das Leder ausüben, die emulgierende Wirkung beseitigende unlösliche Verbindungen. So beschreibt beispielsweise die DE 35 29 869 A1 ein Verfahren zum Hydrophobieren von Leder und Pelzen mit einem Silikonöl und dem Salz einer N-(C₉-C₂₀-Acyl)-Aminosäure als Emulgator in wässriger Phase. In der DE 41 15 062 A1 erfolgt die Hydrophobierung von Leder und Pelzen mit einem Silikon und einer Alkylpolyalkylolethercarbonsäure und/oder einer Alkylarylpolyalkylolethercarbonsäure als Emulgator.

Darüber hinaus können die zur Hydrophobierung verwendeten hydrophoben Substanzen auch selber emulgierende Wirkung aufweisen, beispielsweise, indem sie Carboxylat- oder Phosphatgruppen enthalten. Die DE 38 00 629 A1 offenbart beispielsweise ein Verfahren zum Hydrophobieren unter Verwendung eines carboxylgruppenhaltigen Polysiloxans, wobei die Carboxylgruppen in Form ihrer Salze in Wasser selbst emulgierende Eigenschaften aufweisen, während sie in nicht neutralisierter Form zum Hydrophobieren geeignet sind. In Verbindung mit weiteren hydrophobierenden Substanzen werden derartige Carbonsäure- oder Carbonsäureanhydrid-Gruppen tragenden Polysiloxane ebenfalls in der EP 1 087 021 B1 beschrieben. DE 199 59 949 A1 und EP 0 745 141 B1 beschreiben ähnliche carboxylgruppenhaltige Silikone, deren Eigenschaften durch Variation des Bindegliedes zwischen Polyorganosiloxankette und Carboxylgruppe weiter optimiert werden.

In den letzten Jahren sind zudem zahlreiche Lederbehandlungsmittel zum Nachfärben, Füllen, Fetten und Hydrophobieren von Ledern und Pelzen in wässriger Lösung auf der Basis von Copolymerisaten entwickelt worden. Diese Colpolymerisate bestehen aus hydrophilen und hydrophoben Monomerkomponenten in unterschiedlichen Mengenverhältnissen. Der hydrophile Teil des Copolymerisates bewirkt die Wasseremulgierbarkeit, der hydrophobe Teil erzeugt unter anderem die fettende und hydrophobierende Wirkung des Copolymerisates. So beschreibt die DE 26 29 748 A1 beispielsweise die Verwendung von Copolymerisaten aus Monoolefinen der Kettenlänge von etwa C₁₀-C₃₀ und Maleinsäureanhydrid. Ein Copolymerisat aus ähnlichen Monomereinheiten ist ebenfalls aus der DE 39 26 167 A1 bekannt. In der DE 39 09 614 A1 werden zur Hydrophobierung Copolymerisate aus Maleinsäureanhydrid und ungesättigten Fettsäuren und/oder ihren Derivaten, welche zugleich mindestens eine Sulfo- oder Sulfatogruppe im Molekül enthalten, eingesetzt. Auch diese Verbindungen sind aufgrund der vorhandenen Carboxylgruppen im Molekül praktisch selbst emulgierend, können aber mit mehrwertigen Metallsalzen fixiert werden.

Ebenso können spezielle Phosphorsäureester ohne weitere Zusätze nach entsprechender Fixierung eine gute hydrophobierende Wirkung entfalten. Derartige Fettungs- und Hydrophobierungsmittel sind beispielsweise aus der DE 32 07 562 A1 bekannt. Darin sind bis zu 10 Phosphorsäureester-Einheiten, in der langkettige, ungesättigte oder gesättigte Verbindungen als Veresterungskomponente enthalten sind, über Diol- oder Polyoleinheiten miteinander verbunden. Mit derartigen Verbindungen behandelte Leder zeichnen sich durch gute Weichheit und Geschmeidigkeit und angenehmen Griff sowie durch eine außergewöhnlich hohe dynamische Wasserfestigkeit aus.
Des weiteren offenbart DE 199 42 681 A1 ein Copolymer zur Behandlung von Leder und Pelzfellen, das durch Polymerisation einer Kohlenstoff-Kohlenstoff-Doppelbindung aufweisenden Mono- oder Dicarbonsäure mit einer Verbindung erhältlich ist, wobei die Verbindung dadurch herstellbar ist, dass
a) ein Fettalkohol und/oder ein Wachsalkohol mit einer Kohlenstoff-Kohlenstoff-Doppelbindung aufweisenden Dicarbonsäure oder einem Anhydrid davon umgesetzt wird,
b) das Produkt aus Schritt a) mit einem Alkanolamin reagiert wird und
c) das Produkt aus Schritt b) mit einem Phosphatierungsmittel umgesetzt wird. Eine Behandlung von Leder bzw. Pelzfellen mit derartigen Copolymeren verleiht ihnen einen runden, warmen, seidigen Griff. Darüber hinaus hat sich gezeigt, dass die genannten Copolymere extrem wasch- und reinigungsbeständig sind.

Die oben genannten Mittel und Verfahren wurden soweit optimiert, dass bei Chromleder eine ausgezeichnete Hydrophobierung mit Maeserwerten zum Teil über 100.000 Stauchungen erreicht werden können. Einen großen Fortschritt haben hier insbesondere die Verwendung bzw. Mitverwendung organomodifizierter Silikone, wie zum Beispiel carboxylgruppenhaltiger Silikone erbracht, die die gute hydrophobierende Wirkung des Silikons mit der Möglichkeit der irreversiblen Bindung an das Chromleder vereinigen.

Schwierigkeiten sind jedoch immer dann zu erwarten, wenn bei der Lederherstellung zu viele hydrophile Hilfsmittel eingesetzt werden. Dies ist zum Beispiel bei stark mit pflanzlichen und/oder synthetischen Nachgerbstoffen übersetzten Chromledern oder bei gänzlich chromfreien (FOC) Ledern der Fall. Die hohe Anzahl hydrophiler funktioneller Gruppen der pflanzlichen oder synthetischen Gerbstoffe machen eine Hydrophobierung mit den bisher bekannten Mitteln bei diesen Lederarten nur unzureichend oder gar nicht möglich.

Ein weiteres ungelöstes Problem stellt die hydrophobe Ausrüstung sogenannter standiger Lederarten dar. Hierunter sind Leder zu verstehen, die nur eine geringe Weichheit, dafür aber eine größere Dicke und hohe Festigkeiten aufweisen. Diese Lederarten kommen vorwiegend für Strapazierschuhwerk, Militär- und Feuerwehrstiefel, Arbeitsschutzschuhwerk usw. zur Anwendung.

Alle oben beschriebenen Hydrophobierungsmittel bewirken jedoch eine deutliche Zunahme der Weichheit, da langkettige hydrophobe Kohlenwasserstoffe und insbesondere auch Silikonöle eine ausgezeichnete Gleitwirkung aufweisen, und damit die Reibung zwischen den Lederfasern stark herabsetzen. Auch die für die Hydrophobierung verwendeten Alkylphosphate und die Copolymere aus Maleinsäureanhydrid und langkettigen ungesättigten Kohlenwasserstoffe führen zu sehr weichen Ledern.

Bei der Hydrophobierung von Ledern, bei deren Herstellung sehr viele hydrophile Hilfsmittel eingesetzt wurden, oder bei standigen Ledern wurden bisher entweder Fluorkarbone als Hydrophobierungsmittel eingesetzt, welche jedoch sehr teuer sind, oder es war erforderlich, zusätzliche Hilfsmittel wie z.B. Gerbstoffe zuzusetzen, die der Weichheit entgegenwirken.

Aufgabe der vorliegenden Erfindung war es daher, ein Mittel zu finden, welches einerseits bei stark mit hydrophilen Hilfsmitteln, insbesondere pflanzlichen und/oder synthetischen Gerbstoffen, übersetzten Ledern, besonders bei Chromleder, eine ausreichende Hydrophobierung bewirkt und bei der Herstellung von chromfreien Ledern zumindest eine reduzierte Wasserzügigkeit ermöglicht, andererseits aber die Weichheit nicht oder nur wenig beeinflusst, so dass es insbesondere auch bei der Hydrophobierung standiger Leder geeignet ist.

Die Aufgabe wurde gelöst durch Bereitstellung eines Copolymeren, erhältlich aus Monomereinheiten umfassend
a) ein oder mehrere Verbindungen der Formel 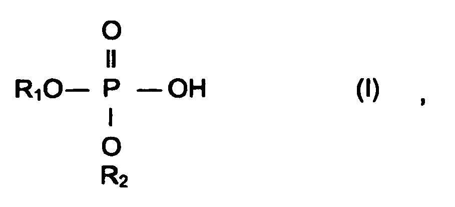 wobei R₁ H oder einen einfach oder mehrfach ethylenisch ungesättigten Fettalkohol mit 8 bis 30 Kohlenstoffatomen darstellt und R₂ denselben oder einen davon verschiedenen einfach oder mehrfach ethylenisch ungesättigten Fettalkohol mit 10 bis 22 Kohlenstoffatomen darstellt und
b) eine oder mehrere geradkettige oder verzweigte mindestens einfach ethylenisch ungesättigte Verbindungen umfassend 2 bis 8 Kohlenstoffatome mit zusätzlich mindestens zwei Carbonsäure-, Ester- oder Amid-Gruppen oder mindestens einer Anhydrid-Gruppe.

Die unter a) aufgeführten Phosphorsäureester resultieren vorzugsweise aus der Umsetzung von Phosphorpentoxid mit Fettalkohol, wobei ein Gemisch aus Mono- und Diester entsteht. Die Phosphorsäureester können jedoch auch auf andere aus dem Stand der Technik bekannte Weise hergestellt werden. Es ist möglich, zur Ausbildung des Copolymeren sowohl reine Phosphorsäuremonoester, als auch reine Phosphorsäurediester sowie auch ein Gemisch aus einem Phosphorsäuremono- und einem Phsophorsäurediester einzusetzen.

Die Reste R₁ und R₂ im Phosphorsäurediester können dabei sowohl identisch als auch voneinander verschieden sein. Des weiteren kann zur Ausbildung des Copolymers als Monomereinheit a) ein Gemisch aus zwei oder mehr Phosphorsäuremonoestern mit unterschiedlichem R₂, ein Gemisch aus zwei oder mehr Phosphorsäurediestern, bei denen in jeder Verbindung zwar R₁ = R₂, aber dieser Rest in den jeweiligen zwei oder mehr Diestern verschieden ist, oder ein Gemisch aus zwei oder mehr Phosphorsäurediestern, bei denen R₁ ungleich R2 ist und R₁ oder R₂ oder beide in den jeweiligen zwei oder mehr Verbindungen verschieden sind, verwendet werden. Vorzugsweise kommt ein Gemisch aus einem Phosphorsäuremono- und einem Phosphorsäurediester zur Anwendung, wobei beim Diester R₁ = R₂ ist.

Der einfach oder mehrfach ethylenisch ungesättigte Fettalkohol weist 8 - 30 Kohlenstoffe, vorzugsweise 15 - 25, besonders bevorzugt 18-22 Kohlenstoffatome auf. Beispiele geeigneter Fettalkohole stellen Oleylalkohol, Elaidylalkohol, Ricinolalkohol, Linoleylalkohol, Linolenylalkohol, Gadoleylalkhohol, Erucylalkohol oder Brassidylalkohol dar, wobei einfach ethylenisch ungesättigte Fettalkohole besonders bevorzugt sind.

Die Monomereinheit b) stellt vorzugsweise eine hydrophile Monomerkomponente dar, was entsprechend bei der Auswahl der Reste der Ester- und Amid-Gruppe zu berücksichtigen ist. Die möglichen Kohlenstoffatome in den Resten der Ester- bzw. Amid-Gruppe sind in der o.g. Zahl von 2 - 8 Kohlenstoffatomen noch nicht berücksichtigt. Vorzugsweise handelt es sich bei der Carbonsäue-, Ester-, Amid- oder Anhydrid-Gruppen tragenden Verbindung um ein Kohlenwasserstoff-Gerüst. Besonders bevorzugt finden Verbindungen mit Carbonsäure- und Carbonsäureanhydrid-Gruppen Anwendung. Beispielsweise können Maleinsäure, Fumarsäure, Maleinsäureanhydrid, Itaconsäure oder Sorbinsäure verwendet werden. Es ist ebenfalls möglich, ein Gemisch verschiedener Monomereinheiten b) zur Ausbildung des Copolymeren einzusetzen.

Obwohl die Monomereinheiten a) und b) auch als Blockcopolymer vorliegen oder statistisch im Copolymer verteilt sein können, ist es bevorzugt, dass sie ein alternierendes Copolymer ausbilden. Das Molverhältnis zwischen den Monomereinheiten a) und b) im Copolymer ist abhängig von der Jodzahl und wird so ausgelegt, dass eine entsprechend alternierendes Copolymer entsteht.

Umfasst die Monomereinheit a) mehrere verschiedene Verbindungen der Formel I, so können diese im Copolymer ebenfalls statistisch verteilt sein oder alternierend oder als Block vorliegen. Je nach Anordnung der Monomereinheiten a) und b) im Copolymer bedeutet dies, dass bei deren statistischer Verteilung eine vollständig statistische Verteilung vorliegen kann, bei alternierenden Monomereinheiten a) und b) die verschiedenen Monomereinheiten a) statistisch alternieren, blockweise alternieren oder alternierend alternieren, während im Blockcopolymer der Block aus der Monomehreinheit a) eine statistische Verteilung der verschiedenen Phosphorsäureester aufweisen kann, ebenso wie eine alternierende Verteilung oder deren blockartige Anordnung. Vorzugsweise kommt ein Gemisch aus einem Phosphorsäuremono- und einem Phosphorsäurediester zur Anwendung, wobei beim Diester R₁ = R₂ ist, bei dem die Monomereinheiten a) und b) alternieren.

Es ist bevorzugt, dass das Copolymer als Salz vorliegt. Vorzugsweise findet das Copolymer in Form seines Alkalisalzes, beispielsweise als Natriumsalz, oder seines Ammoniumsalzes Verwendung. Auch vom Ammonium-lon abgeleitete organische Derivate sind vorliegend als Gegenionen geeignet. So können beispielsweise Monoethanolamin, Diethanolamin, Triethanolamin oder Monoisopropanolamin zur Salzbildung verwendet werden.

Die vorliegende Erfindung betrifft ebenfalls ein Verfahren zur Herstellung der oben beschriebenen Copolymere, welches eine radikalische Polymerisation der oben genannten Komponenten a) und b) umfasst und anschließend optional die Umsetzung des erhaltenen Reaktionsproduktes mit einer Alkalilauge. Es ist jedoch auch möglich, die oben beschriebenen Copolymere durch andere aus dem Stand der Technik bekannte Copolymerisationsvefahren herzustellen.

Vorteilhafterweise werden als Monomereinheiten a) und b) solche Verbindungen ausgewählt, die nicht mit sich selber polymerisieren. Vorzugsweise handelt es sich dabei um einfach ethylenisch ungesättigte Dicarbonsäure- oder Anhydridverbindungen, wie Maleinsäureanhydrid, Maleinsäure oder Itaconsäure. Dies hat den Vorteil, dass ohne weitere erforderlichen reaktionssteuernden Maßnahmen ein alternierendes Copolymer entsteht, und ein Überschuss eines der Monomere ausreicht, um das Reaktionsgleichgewicht auf die Seite des Copolymers zu verschieben.

Die vorliegende Erfindung betrifft ebenfalls ein Mittel zur hydrophobierenden Ausrüstung von Leder, welches das oben beschriebene Copolymer enthält. Überraschenderweise wurde festgestellt, dass die beschriebenen Copolymere dem Leder eine ausgezeichnete Hydrophobierung verleihen, die auch bei starker pflanzlicher und/oder synthetischer Nachgerbung noch gut ausgeprägt ist. Auch bei völlig chromfreien Ledern kann eine Reduzierung der Wasserzügigkeit beobachtet werden. Besonders erwähnenswert ist die Tatsache, dass die Weichheit nicht erhöht wird und die Leder einen standigen Charakter aufweisen.

Dies war insofern überraschend, als sowohl die aus dem Stand der Technik bekannten und zur Hydrophobierung verwendeten Phosphorsäureester als auch Copolymerisate aus ethylenisch ungesättigten Dicarbonsäuren bzw. Carbonsäurenanhydriden und langkettigen, ungesättigten Kohlenwasserstoffen zu einer deutlichen Erhöhung der Weichheit führen, das vorliegende Copolymer aus den beschriebenen Phosphorsäureestern und den ethylenisch ungesättigten Verbindungen hingegen die Weichheit nicht erhöhen und damit ebenfalls zur Hydrophobierung standiger Leder geeignet sind.

In einer bevorzugten Ausführungsform enthält das Lederbehandlungsmittel das oben beschriebene Copolymer in einer Menge von 10 - 60 Gew.-%, vorzugsweise 15 - 50 Gew.-%, besonders bevorzugt 20 - 30 Gew.-% bezogen auf das gesamte Mittel.

Das vorliegende Lederbehandlungsmittel kann zusätzlich eine oder mehrere Substanzen aus der Gruppe umfassend
a) Fette, Öle oder Wachse natürlichen oder synthetischen Ursprungs,
b) Emulgatoren und
c) Silikonöle
enthalten.

Zu den bevorzugt eingesetzten Fetten, Ölen oder Wachsen zählen beispielsweise langkettige Kohlenwasserstoffe wie festes und/oder flüssiges Paraffin, Chlorparaffine, Paraffinöl oder Weißöl, Mineralöle und Paraffinwachse. Bei den synthetischen Verbindungen sind beispielsweise zu nennen Alkylbenzole, Polyethylenwachse und Polyisobotylenwachse. Zu den geeigneten nativen Ölen und Wachsen zählen Wollfett, Bienenwachs, Carnaubawachs, Fischöl, Rüböl und Lecithin. Auch Fettsäureester, zum Beispiel Esteröle und Fettsäurepolyolester, können vorliegend verwendet werden.

Bei den verwendeten Emulgatoren ist zu berücksichtigen, dass diese die Hydrophobierung nicht stören dürfen. Daher werden vorzugsweise Emulgatoren aus der Gruppe der Sarkosinate oder Sulfosuccinate ausgewählt.

Die dem vorliegenden Lederbehandlungsmittel optional zugefügten Silikonöle sind vorzugsweise organomodifiziert. Besonders bevorzugt enthalten sie eine oder mehrere Amino- und/oder Carboxylgruppen.

Obwohl die oben genannten Verbindungen, wenn sie ohne das erfindungsgemäße Copolymerisat eingesetzt werden, die Weichheit des hydrophobierten Leders erhöhen, zeigte sich überraschenderweise, dass in Kombination mit dem beschriebenen Copolymer diese Verbindungen die Standigkeit des Leders nicht negativ beeinflussen. Insbesondere die Kombination des Copolymers mit Silikonölen und ganz besonders mit organomodifizerten Silikonölen wie oben beschrieben, ergab hinsichtlich der Hydrophobierung von stark vegetabilisch synthetisch nachgegerbten Ledern bzw. von chromfreien Ledern einen synergistischen Effekt, ohne die Standigkeit der Leder, wie eigentlich zu erwarten gewesen wäre, zu beeinträchtigen.

In einer weiteren bevorzugten Ausführungsform enthält das Lederbehandlungsmittel 0 - 30 Gew.-%, vorzugsweise 5 - 20 Gew.-%, besonders bevorzugt 10 - 15 Gew.-% Fette, Öle oder Wachse natürlichen oder synthetischen Ursprungs; 0 - 30 Gew.-%, vorzugsweise 10 - 25 Gew.-%, besonders bevorzugt 15 - 20 Gew.-% Emulgatoren, insbesondere aus der Gruppe der Sarkrosenate oder Sulfosuccinate; und 0 - 25 Gew.-%, vorzugsweise 5 - 20 Gew.-%, besonders bevorzugt 5 - 10 Gew.-% Silikonöle, insbesondere aminofunktionelle und/oder carboxylgruppenfunktionelle Silikonöle.

Darüber hinaus kann das vorliegende Lederbehandlungsmittel bis zu 20 Gew.-% eines Lösungsmittels enthalten, wie beispielsweise Glykole oder Glykolether wie Hexylenglykol, Butylglykol, Butyldiglykol, 1,2-Propylenglykol, Monoethylenglykol und ähnliche. Zudem ist in dem vorliegenden Lederbehandlungsmittel optional bis zu 80 Gew.-%, vorzugsweise bis zu 60 Gew.-% und besonders bevorzugt bis zu 40 Gew.-% Wasser enthalten.

Vorzugsweise weist das vorliegende Lederbehandlungsmittel einen pH-Wert von 5,5 - 9,5, besonders bevorzugt von 6 - 9 und ganz besonders bevorzugt von 8 - 9 auf. Es hat sich gezeigt, dass eine besonders gute Löslichkeit der Produkte unter basischen Bedingungen erzielt werden kann.

Ein weiterer Gegenstand der vorliegenden Erfindung betrifft ein Verfahren zur Behandlung von Leder, bei welchem das oben beschriebene Lederbehandlungsmittel in mindestens einem Behandlungsschritt verwendet wird. Vorzugsweise kommt dabei das Lederbehandlungsmittel in einer Konzentration von 1 - 20 Gew.-%, besonders bevorzugt 2 - 15 Gew.-%, ganz besonders bevorzugt 4 - 10 Gew.-% bezogen auf das Falzgewicht zum Einsatz. Es ist sowohl möglich, das Lederbehandlungsmittel vollständig in einem der Nasszurichtungsschritte zuzugeben, als auch dieses auf mehrere Zurichtungsschritte zu verteilen bzw. bei einem oder mehreren Zurichtungsschritten die Gesamtmenge auf mehrere Portionen zu verteilen und diese zu unterschiedlichen Zeitpunkten zuzugeben.

Obwohl es hinsichtlich des eingesetzten Leders keine Beschränkung gibt, wird vorzugsweise standiges Leder eingesetzt, insbesondere solches, mit einer Falzstärke von 1,0 - 3,0 mm, vorzugsweise 2,0 - 2,7 mm.

Die vorliegende Erfindung wird in den nachfolgenden Beispielen näher erläutert, ohne jedoch auf diese beschränkt zu sein. Wenn nicht anders angegeben, beziehen sich Prozentzahlen auf Gewichtsteile bezogen auf das Falzgewichts des Leders.

**Beispiel 1:**

500 g eines nach üblichem Verfahren dargestellten Oleyl (C₁₈H₃₅O)-phosphats mit einer Jodzahl (nach Hanus) von ca. 80 werden in einem Rundkolben mit Rührer, Rückflusskühler, Gaseinleitungsrohr, Tropftrichter und Temperaturregelung mit 156 g Maleinsäureanhydrid versetzt und das Gemisch auf 140 °C unter Einleitung von Stickstoff aufgeheizt. Über den Tropftrichter wird eine Lösung bestehend aus 3 g Di-tert.-butylperoxid und 30 g Diethylenglykolmonobutylether kontinuierlich zugegeben. Die auftretende Exothermie ist Hinweis für den Beginn der Polymerisation. Die Dosierung des Radikalstarters wird dabei so vorgenommen, dass sich eine Temperatur von ca. 160°C im Reaktionskolben einstellt. Gegebenenfalls ist mit Heizung bzw. Kühlung auf die angegebene Temperatur nachzuregulieren. Nach Beendigung der Dosierung (ca. 1 Std.) erfolgt eine Nachreaktion von 3 Stunden bei 160°C. Das viskose Reaktionsprodukt wird auf 80°C abgekühlt und mit 300 ml Wasser versetzt und langsam 75 g Natronlauge (45%i g) zugegeben. Zur vollständigen Hydrolyse werden weitere 60 Minuten bei 70°C gerühert. Es resultiert ein goldgelbes viskoses Produkt. Die Bestimmung der Molmasse mit Hilfe der Gel-Permeations-Chromatorgraphie (GPC) ergab eine Mittlere Molmasse Mw = 4300 Dalton.

**Beispiel 2:**

Es wird folgende Zubereitung hergestellt:
20 % Polymer aus Beispiel 1
20 % Oleylsarkosinsäure
15 % Mineralöl
10 % Diethylenglykolmonobutylether
5 % aminofunktionelles Silikonöl
30 % Wasser

Mit Monethanolamin wird auf pH 9 eingestellt. Es resultiert eine goldgelbe, ölige Flüssigkeit, die mit Wasser eine feinteilige Emulsion ergibt.

**Beispiel 3:**

500 g eines nach üblichem Verfahren dargestellten Gadoleyl (C₂₀H₃₉O)-phosphats mit einer Jodzahl (nach Hanus) von ca. 150 werden in einem Rundkolben mit Rührer, Rückflusskühler, Gaseinleitungsrohr, Tropftrichter und Temperaturregelung mit 380 g Itaconsäure versetzt und das Gemisch auf 170 °C unter Einleitung von Stickstoff aufgeheizt. Über den Tropftrichter wird eine Lösung bestehend aus 3 g Di-tert.-butylperoxid und 30 g Diethylenglykolmonobutylether kontinuierlich zugegeben. Die auftretende Exothermie ist Hinweis für den Beginn der Polymerisation. Die Dosierung des Radikalstarters wird dabei so vorgenommen, dass sich eine Temperatur von ca. 170°C im Reaktionskolben einstellt. Gegebenenfalls ist mit Heizung bzw. Kühlung auf die angegebene Temperatur nachzuregulieren. Nach Beendigung der Dosierung (ca. 1 Std.) erfolgt eine Nachreaktion von 3 Stunden bei 170°C. Das viskose Reaktionsprodukt wird auf 80°C abgekühlt, mit 400 ml Wasser versetzt und langsam 95 g Natronlauge (45%ig) zugegeben. Zur vollständigen Hydrolyse werden weitere 60 Minuten bei 80°C gerühert.

Es resultiert ein braunes viskoses Produkt. Die Bestimmung der Molmasse mit Hilfe der GPC ergab eine Mittlere Molmasse Mw = 5100 Dalton.

**Beispiel 4:**

Es wird folgende Zubereitung hergestellt:
25 % Polymer aus Beispiel 3
20 % Laurylsarkosinsäure
10 % Mineralöl
10 % carboxylgruppenfunktionelles Silikonöl
5 % Butylglykol
30 % Wasser

Mit Triethanolamin wird auf pH 8 eingestellt. Es resultiert eine klare, braune, viskose Flüssigkeit, die mit wasser eine grobdisperse Emulsion ergibt.

**Beispiel 5:**

Wet blue Rind mit einer Falzstärke von 2,0 bis 2,2 mm wird nach folgender Rezeptur bearbeitet:

| **Operation** | **Menge Einheit** | **Produkt** | **pH-Wert** |
|---|---|---|---|
| | 200,0 % | Wasser | |
| | 0,1 % | Ameisensäure | 3,5 |

| Flotte ablassen | | | |
|---|---|---|---|
| | 125,0 % | Wasser | |
| | 3.0 % | Chromgerbstoff 33% bas. | |
| | 2,0 % | Natriumformiat | |
| | 1,8 % | Natriumhydrogencarbonat | 5,5 |

| Flotte ablassen | | | |
|---|---|---|---|
| | 100,0 % | Wasser | |
| | 8,0 % | synthetischer Gerbstoff | |
| | 8,0 % | Kastanie | |
| | 2,0 % | Farbstoff | 4,4 |
| | | | |
| | 60,0 % | Wasser | |

| Flotte ablassen | | | |
|---|---|---|---|
| | 200,0 % | Wasser | |

| Flotte ablassen | | | |
|---|---|---|---|
| | 150,0 % | Wasser | |
| | 8,0 % | Produkt aus Beispiel 2 | |
| | 1,2 % | Ameisensäure | |
| | 3,0 % | Chromgerbstoff 33% bas. | |

| Flotte ablassen | | | |
|---|---|---|---|
| | 300,0 % | Wasser | |
| | | | |
| Vakuumtrocknung | | | |
| ablüften | | | |
| anfeuchten | | | |
| stollen | | | |

Es resultiert ein sehr standiges und festnarbiges Leder, welches z.B. für Militärstiefelleder oder Leder für Arbeitsschutzschuhwerk geeignet ist. Die Hydrophobierungseigenschaften wurden nach DIN 53338 bestimmt, wobei entsprechend der Lederdicke eine Stauchung von 10 % vorgenommen wurde.

Die Lederproben wiesen nach 24 Stunden Prüfdauer keinen Wasserdurchtritt auf bei einer Wasseraufnahme von 13 %.

**Beispiel 6:**

Wet blue Rind mit einer Falzstärke von 2,5 bis 2,7 mm wurde nach folgender Rezeptur bearbeitet:

| **Operation** | **Menge Einheit** | **Produkt** | **pH-Wert** |
|---|---|---|---|
| | 200,0 % | Wasser | |
| | 0,1 % | Ameisensäure | 3,5 |

| Flotte ablassen | | | |
|---|---|---|---|
| | 150,0 % | Wasser | |
| | 2,0 % | Glutardialdehyd 50%ig | |
| | 2,0 % | Natriumformiat | 4,5 |
| | | | |
| | 3,0 % | synthetischer Gerbstoff | |
| | 4,0 % | Melamin/Formaldehyd-Gerbst | |
| | 5,0 % | Kastanie | |
| | 5,0 % | Mimosa | |
| | 5,0 % | Quebracho | |
| | 2,0 % | Farbstoff | |
| | 0,4 % | Natriumhydrogencarbonat | |
| | | | |
| | 2,0 % | Produkt aus Beispiel 4 | |

| Flotte ablassen | | | |
|---|---|---|---|
| | 200,0 % | Wasser | |

| Flotte ablassen | | | |
|---|---|---|---|
| | 50,0 % | Wasser | |
| | 3,0 % | Produkt aus Beispiel 4 | |
| | | | |
| | 2,5 % | Farbstoff | |
| | | | |
| | 50,0 % | Wasser | |
| | 3,0 % | Produkt aus Beispiel 4 | |
| | 0,3 % | Ameisensäure | |
| | | | |
| | 50,0% | Wasser | |
| | 0,3 % | Ameisensäure | 4 |

| Flotte ablassen | | | |
|---|---|---|---|
| | 100,0 % | Wasser | |
| | 0,3 % | Ameisensäure | 3,7 |
| | 2,5 % | Aluminiumtriformiat | |
| | 1,2 % | Natriumhydrogencarbonat | 3,8 |

| Flotte ablassen | | | |
|---|---|---|---|
| | 200,0 % | Wasser | |

| Flotte ablassen | | | |
|---|---|---|---|
| | 200,0 % | Wasser | |
| | | | |
| Vakuumtrocknung | | | |
| ablüften | | | |
| anfeuchten | | | |
| stollen | | | |

Es resultiert ein sehr standiges, festnarbiges Leder mit Vegetabillook. Die Hydrophobierungseigenschaften wurden nach ASTM D 2099 (Maeser-Test) geprüft. Die Proben zeigten nach 50 000 Stauchungen keinen Wasserdurchtritt bei einer Wasseraufnahme von 16%.

## Patentansprüche

1. Copolymer, erhältlich aus Monomereinheiten umfassend
a) eine oder mehrere Verbindungen der Formel, 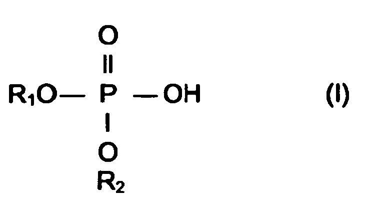 wobei R₁ H oder einen einfach oder mehrfach ethylenisch ungesättigten Fettalkohol mit 8 bis 30, vorzugsweise 15-25, besonders bevorzugt 18-22 Kohlenstoffatomen darstellt und R₂ denselben oder einen davon verschiedenen einfach oder mehrfach ethylenisch ungesättigten Fettalkohol mit 8 bis 30, vorzugsweise 15 - 25, besonders bevorzugt 18-22 Kohlenstoffatomen darstellt und
b) eine oder mehrere geradkettige oder verzweigte mindestens einfach ethylenisch ungesättigte Verbindungen umfassend 2 bis 8 Kohlenstoffatome mit zusätzlich mindestens zwei Carbonsäure-, Ester- oder Amid-Gruppen oder mindestens einer Anhydrid-Gruppe.

2. Copolymer nach Anspruch 1, **dadurch gekennzeichnet, dass** die Monomereinheit b) ausgewählt ist aus der Gruppe umfassend Maleinsäure, Fumarsäure, Maleinsäureanhydrid, Itaconsäure oder Sorbinsäure.

3. Copolymer nach den Ansprüchen 1 oder 2, **dadurch gekennzeichnet, dass** die Monomereinheiten a) und b) im Copolymer alternierend angeordnet sind.

4. Copolymer nach einem der Ansprüchen 1 bis 3, **dadurch gekennzeichnet, dass** das Copolymer als Salz, insbesondere als Alkalisalz oder Ammoniumsalz, vorliegt.

5. Verfahren zur Herstellung der Copolymere gemäß einem der Ansprüche 1 bis 4 umfassend eine radikalische Polymerisation der Komponenten a) und b) aus Anspruch 1 und anschließend optional Umsetzung des Reaktionsproduktes mit einer Alkalilauge, Ammoniak oder einem Mono-, Di- oder Trialkanolamin.

6. Mittel zur hydrophobierenden Ausrüstung von Leder enthaltend das Copolymer gemäß einem der Ansprüche 1 bis 4.

7. Mittel nach Anspruch 6, **dadurch gekennzeichnet, dass** es das Copolymer in einer Menge von 10 bis 60 Gew.-%, vorzugsweise 15 bis 50 Gew.-%, besonders bevorzugt 20 bis 30 Gew.-% bezogen auf das gesamte Mittel enthält.

8. Mittel nach einem der Ansprüche 6 oder 7, **dadurch gekennzeichnet dass** es zusätzlich eine oder mehrere Substanzen aus der Gruppe umfassend
a) Fette, Öle, oder Wachse natürlichen oder synthetischen Ursprungs
b) Emulgatoren
c) Silikonöle
enthält.

9. Mittel nach Anspruch 8, **dadurch gekennzeichnet, dass** die Emulgatoren ausgewählt sind aus der Gruppe der Sarkosinate oder Sulfosuccinate.

10. Mittel nach einem der Ansprüche 8 oder 9, **dadurch gekennzeichnet, dass** die Silikonöle organomodifiziert sind.

11. Mittel nach Anspruch 10, **dadurch gekennzeichnet, dass** die organomodifizierten Siliconöle eine oder mehrere Amino- und/oder Carboxylgruppen enthalten.

12. Mittel nach einem der Ansprüche 6 bis 11, **dadurch gekennzeichnet, dass** es einem pH-Wert von 5,5 bis 9,5 aufweist.

13. Verfahren zur Behandlung von Leder **dadurch gekennzeichnet, dass** das Lederbehandlungsmittel nach einem der Ansprüche 6 bis 11 in mindestens einem Schritt verwendet wird.

14. Verfahren nach Anspruch 13, **dadurch gekennzeichnet, dass** das Lederbehandlungsmittel in einer Konzentration von 1 bis 20 Gew.-% bezogen auf das Falzgewicht verwendet wird.

15. Verfahren nach einem der Ansprüche 13 oder 14, **dadurch gekennzeichnet, dass** standiges Leder eingesetzt wird, insbesondere mit einer Falzstärke von 1,0 bis 3,0 mm.

## Claims

1. A copolymer, which can be obtained from monomer units comprising
a) one or more compounds of formula 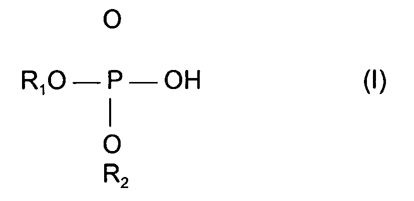 wherein R₁ represents H or an ethylenically mono- or polyunsaturated fatty alcohol with 8 to 30, preferably 15 to 25, more preferably 18 to 22 carbon atoms, and R₂ represents the same or other ethylenically mono- or polyunsaturated fatty alcohol with 8 to 30, preferably 15 to 25, more preferably 18 to 22 carbon atoms, and
b) one or more straight-chain or branched, at least ethylenically mono-unsaturated compounds comprising 2 to 8 carbon atoms and additionally having at least two carboxylic acid, ester or amide groups or at least one anhydride group.

2. The copolymer according to claim 1, **characterized in that** the monomer unit b) is selected from the group comprising maleic acid, fumaric acid, maleic anhydride, itaconic acid or sorbic acid.

3. The copolymer according to claim 1 or 2, **characterized in that** the monomer units a) and b) in the copolymer are arranged in an alternating fashion.

4. The copolymer according to any of claims 1 to 3, **characterized in that** the copolymer is present in the form of a salt, especially as an alkali salt or ammonium salt.

5. A method for the production of the copolymers according to any of claims 1 to 4, said method comprising free-radical polymerization of the components a) and b) of claim 1 and subsequent optional reaction of the reaction product with an alkaline solution, ammonia or mono-, di- or trialkanolamine.

6. An agent for hydrophobizing finishing of leather, which agent includes the copolymer according to any of claims 1 to 4.

7. The agent according to claim 6, **characterized in that** the copolymer is included therein in amounts of from 10 to 60 wt.-%, preferably from 15 to 50 wt.-%, and more preferably from 20 to 30 wt.-%, relative to the overall agent.

8. The agent according to any of claims 6 or 7, **characterized in that** the agent additionally includes one or more substances from the group comprising
a) fats, oils, or waxes of natural or synthetic origin;
b) emulsifiers;
c) silicone oils.

9. The agent according to claim 8, **characterized in that** the emulsifiers are selected from the group of sarcosinates or sulfosuccinates.

10. The agent according to any of claims 8 or 9, **characterized in that** the silicone oils are organo-modified.

11. The agent according to claim 10, **characterized in that** the organo-modified silicone oils include one or more amino and/or carboxyl groups.

12. The agent according to any of claims 6 to 11, **characterized in that** the agent has a pH value of from 5.5 to 9.5.

13. A method for the treatment of leather, **characterized in that** the leather treatment agent according to any of claims 6 to 11 is used in at least one step.

14. The method according to claim 13, **characterized in that** the leather treatment agent is used at a concentration of from 1 to 20 wt.-%, relative to the shaving weight.

15. The method according to any of claims 13 or 14, **characterized in that** firm leather is employed, particularly leather having a shaving thickness of from 1.0 to 3.0 mm.

## Revendications

1. Copolymère pouvant être obtenu à partir de motifs monomères comprenant
a) un ou plusieurs composés de formule : 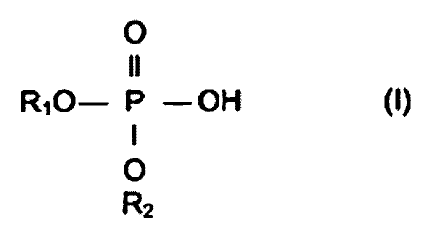 dans laquelle R₁ représente H ou un alcool gras mono ou polyinsaturé par double liaison avec 8 à 30 atomes de carbone, de préférence 15 à 25, de manière particulièrement préférée 18 à 22, et R₂ représente le même ou un autre alcool gras mono ou polyinsaturé par double liaison avec 8 à 30 atomes de carbone, de préférence 15 à 25, de manière particulièrement préférée 18 à 22, et
b) un ou plusieurs composés linéaires ou ramifiés insaturés au moins une fois par double liaison, comprenant 2 à 8 atomes de carbone avec en plus au moins deux groupements acide carboxylique, ester ou amide ou au moins un groupement anhydride.

2. Copolymère selon la revendication 1, **caractérisé en ce que** le motif monomère b) est choisi dans le groupe comprenant l'acide maléique, l'acide fumarique, l'anhydride maléique, l'acide itaconique ou l'acide sorbique.

3. Copolymère selon la revendication 1 ou 2, **caractérisé en ce que** les motifs monomères a) et b) sont disposés alternativement dans le copolymère.

4. Copolymère selon l'une des revendications 1 à 3, **caractérisé en ce que** le copolymère est présent sous forme de sel, en particulier sous forme de sel alcalin ou de sel d'ammonium.

5. Procédé de préparation des copolymères selon l'une des revendications 1 à 4, comprenant une polymérisation radicalaire des composants a) et b) de la revendication 1 suivie d'une réaction optionnelle du produit réactionnel avec une lessive alcaline, de l'ammoniac ou une mono-, di- ou trialcanolamine.

6. Agent d'imperméabilisation du cuir contenant le copolymère selon l'une des revendications 1 à 4.

7. Agent selon la revendication 6, **caractérisé en ce qu'**il contient le copolymère à hauteur d'une quantité de 10 à 60 % en poids, de préférence 15 à 50 % en poids, de manière particulièrement préférée 20 à 30 % en poids par rapport à l'agent tout entier.

8. Agent selon l'une des revendications 6 ou 7, **caractérisé en ce qu'**il contient en plus une ou plusieurs substances issues du groupe comprenant :
a) des graisses, des huiles ou des cires d'origine naturelle ou synthétique,
b) des émulsifiants,
c) des huiles de silicone.

9. Agent selon la revendication 8, **caractérisé en ce que** les émulsifiants sont choisis dans le groupe des sarcosinates et des sulfosuccinates.

10. Agent selon l'une des revendications 8 ou 9, **caractérisé en ce que** les huiles de silicone sont organiquement modifiées.

11. Agent selon la revendication 10, **caractérisé en ce que** les huiles de silicone organiquement modifiées contiennent un ou plusieurs groupements amine et/ou acide carboxylique.

12. Agent selon l'une des revendications 6 à 11, **caractérisé en ce qu'**il présente un pH de 5,5 à 9,5.

13. Procédé de traitement du cuir, **caractérisé en ce qu'**un agent de traitement du cuir selon l'une des revendications 6 à 11 est utilisé à au moins une étape.

14. Procédé selon la revendication 13, **caractérisé en ce que** l'agent de traitement du cuir est utilisé à une concentration de 1 à 20 % en poids rapporté au poids du pliage.

15. Procédé selon l'une des revendications 13 ou 14, **caractérisé en ce que** l'on utilise un cuir stable, en particulier avec une épaisseur de pliage de 1,0 à 3,0 mm.
